# EUROPÄISCHE PATENTSCHRIFT

(11) **EP 1 075 064 B1**
(45) Veröffentlichungstag und Bekanntmachung des Hinweises auf die Patenterteilung: **25.04.2007**
(21) Anmeldenummer: 99113295.2
(22) Anmeldetag: 09.07.1999
(51) Int. Cl.: H01T 4/16

(54) **Blitz- und Überspannungsschutzeinrichtung**
Lightning- and overvoltage protection device
Dispositif de protection contre la foudre et surtension

(43) Veröffentlichungstag der Anmeldung: 07.02.2001
(73) Patentinhaber: Leutron GmbH, 70771 Leinfelden-Echterdingen (DE)
(72) Erfinder: Alvarez, Angel, 8606 Greifensee (CH)
(74) Vertreter: Wasmuth, Rolf

(56) Entgegenhaltungen:
- EP-A- 0 905 840
- DE-A- 3 317 758
- DE-B- 1 256 306
- DE-C- 903 114
- US-A- 2 298 114
- PATENT ABSTRACTS OF JAPAN vol. 014, no. 213 (E-0923), 7. Mai 1990 (1990-05-07) & JP 02 049387 A (HAKUSAN SEISAKUSHO:KK), 19. Februar 1990 (1990-02-19)

## Beschreibung

Die vorliegende Erfindung betrifft eine Blitz- und Überspannungsschutzeinrichtung im Hauptstromversorgungssystem von baulichen Anlagen, bei dem die Aussenleiter über je einen Blitzstromableiter mit dem Neutralleiter verbunden sind und zwischen diesen und die Potentialausgleichsschiene der baulichen Anlage ein als Summenstromableiter bezeichneter spezieller Blitzstromableiter eingefügt ist.

Aufgabe des Blitz- und Überspannungsschutzes ist es, Gefährdungen von Menschen und Tieren, Beschädigungen von Anlagen und Geräten sowie Brände zu vermeiden. Das bedeutet, dass Überspannungen auf verträgliche Grössen herabgesetzt und starke Impulsströme von empfindlichen Geräten ferngehalten werden müssen. Da diese Aufgaben wegen der Grössenunterschiede zwischen den ursprünglichen und den verträglichen Grössen nicht von einer einzigen Schutzeinrichtung bewältigt werden können, wird eine ganze Kette von Überspannungsschutzeinrichtungen und Impedanzen eingesetzt, von denen die Überspannung stufenweise abgebaut wird.

Das erste Glied mit dem höchsten Überspannungsniveau ist der sogenannte Grobschutz, der den grössten Teil des Stossstroms übernimmt. Die dafür verwendeten Überspannungsschutzeinrichtungen werden auch als Blitzstromableiter bezeichnet. Das zweite Glied ist der sogenannte Mittelschutz und das dritte Glied ist der Feinschutz. Zwischen den Überspannungsschutzeinrichtungen der verschiedenen Niveaus sind Impedanzen als Entkopplungselemente angeordnet, die meist durch eine Leitung und/oder durch eine Entkopplungsdrossel gebildet sind. Diese Entkopplungselemente ermöglichen das Ansprechen der Überspannungsschutzeinrichtungen höheren Niveaus wenn diejenigen niederer Niveaus bereits angesprochen haben, und sie ermöglichen den Abstieg der Überspannung vom höchsten zum niedrigsten Niveau und tragen zur beabsichtigten Verteilung des Impulsstroms bei.

Für den Einsatz von Blitzstromableitern in Hauptstromversorgungssystemen vor dem Zähler sind nur Ableiter auf Funkenstrecken-Basis zugelassen, wobei Blitzstromableiter herkömmlicher Bauart die geforderte Kurzschlussfestigkeit nur in Zusammenhang mit einer Ableiter-Vorsicherung erreichen. Diese Vorsicherung spricht dann an, wenn das Folgestrom-Löschvermögen des Ableiters überschritten wird. Dabei ist zu beachten, dass der Blitzstromableiter den auftretenden Netzfolgestrom so begrenzen muss, dass Hausanschlusssicherungen nicht auslösen. Um ein folgestrombegrenzendes Verhalten zu erzielen, muss die Funkenstrecke im Blitzstromableiter eine Lichtbogenspannung aufbauen, die im Bereich der Grösse des speisenden Netzes liegt.

Zur Lösung dieser Aufgabe sind Funkenstrecken bekannt, die auf einer optimierten Kühlung des Lichtbogens durch radiale und axiale Beblasung basieren, wobei das benötigte Kühlgas unter der Lichtbogeneinwirkung von einem den Lichtbogen umgebenden gasabgebenden Isolierstoff erzeugt wird. Das freigesetzte Kühlgas strömt radial gegen den Lichtbogen und schnürt diesen zusammen, so dass der reduzierte Querschnitt der Bogensäule zum Ansteigen des Lichtbogenwiderstandes und damit zur Erhöhung der Bogenspannung führt. Das durch den Lichtbogen aufgeheizte Kühlgas wird anschliessend durch eine axiale Gasströmung über eine Ausblasdüse nach aussen abgeführt. Das bedeutet, dass aus der Funkenstrecke Stichflammen und Druckwellen austreten, was die Einhaltung von Sicherheitsabständen von benachbarten Bauteilen oder Einrichtungen sowie den Einbau in separate Gehäuse erfordert.

Gleiches gilt für die Blitzstromableiter nach dem sogenannten Arc-Chopping-Verfahren, welche zwei hornförmige Elektroden mit zunehmendem gegenseitigem Abstand sowie eine vor den Stirnseiten dieser Elektroden angeordnete Prallplatte aufweisen. Der Lichtbogen zündet bei der Ansprechspannung am Ort des kleinsten Abstandes zwischen den Innenflächen der Elektroden und überbrückt die Strecke zwischen diesen. Anschliessend wird der Lichtbogen von der Zündungsstelle weg nach aussen gegen die Stirnseiten der Elektroden abgetrieben und auf die Prallplatte geschleudert, wodurch Teillichtbögen zwischen der Prallplatte und den Aussenflächen der Elektroden entstehen, die in der Folge abreissen und erlöschen. Bei diesen Blitzstromableitern treten im Bereich der Stirnseiten der Elektroden und der Prallplatte Stichflammen auf, die seitlich aus dem Blitzstromableiter austreten und ebenfalls die Einhaltung von Sicherheitsabständen und den Einbau in separate Gehäuse erforderlich machen.

Eine Blitz- und Überspannungseinrichtung, gemäß Oberbegriff des Anspruchs 1 ist aus DE-A-3 317 158 bekannt.

Durch die Erfindung soll nun ein als Blitzstromableiter oder Summenstromableiter verwendbarer löschfähiger Ableiter angegeben werden, bei dem weder Stichflammen noch Druckwellen austreten und der in übliche Einrichtungen eingebaut werden kann, ohne dass Sicherheitsabstände eingehalten oder spezielle Gehäuse oder nicht brennbare Unterlagen verwendet werden müssen.

Diese Aufgabe wird erfindungsgemäss dadurch gelöst, dass die genannten Ableiter eine Mehrzahl von in Serie angeordneten Entladungsstrecken aufweisen, welche in einem gasgefüllten und hermetisch abgeschlossenen Gehäuse angeordnet sind.

Durch die hermetische Gasentladungskammer sind keine Ausblasöffnungen vorhanden, aus denen Stichflammen oder Druckwellen austreten können; es sind keine Sicherheitsabstände und keine speziellen Gehäuse notwendig, was sich in einer Einsparung an Platz, Aufwand und Kosten niederschlägt. Ausserdem ist die Ansprechspannung der Stromableiter unabhängig vom Klima und von eventueller Verschmutzung. Die Mehrzahl der Entladungsstrecken hat den Vorteil, dass die verschiedenen Ableiter genau an ihre Spezifikationen angepasst werden können.

Eine erste bevorzugte Ausführungsform der erfindungsgemässen Schutzeinrichtung ist dadurch gekennzeichnet, dass der Summenstromableiter zwei in Serie angeordnete Entladungsstrecken aufweist.

Eine zweite bevorzugte Ausführungsform der erfindungsgemässen Schutzeinrichtung ist dadurch gekennzeichnet, dass die Blitzstromableiter je mehr als zehn in Serie geschaltete Entladungsstrecken aufweisen.

Eine dritte bevorzugte Ausführungsform der erfindungsgemässen Schutzeinrichtung ist dadurch gekennzeichnet, dass das hermetisch abgeschlossene Gehäuse durch Ringe aus einem Keramikmaterial und durch die Stirnseiten abdeckende Endelektroden gebildet ist.

Eine vierte bevorzugte Ausführungsform der erfindungsgemässen Schutzeinrichtung ist dadurch gekennzeichnet, dass das Gehäuse eine Mehrzahl von Kammern aufweist, von denen jede mindestens eine Entladungsstrecke enthält, und dass die einzelnen Kammern durch Metallscheiben voneinander getrennt sind.

Im folgenden wird die Erfindung anhand eines Ausführungsbeispiels und der Zeichnungen näher erläutert; es zeigt:
- Fig. 1: eine schematische Darstellung einer erfindungsgemässen Blitz- und Überspannungsschutzeinrichtung;
- Fig. 2: einen Schnitt durch einen Blitzstromableiter der Einrichtung von Fig. 1; und
- Fig. 3: einen Schnitt durch einen Summenstromableiter der Einrichtung von Fig. 1.

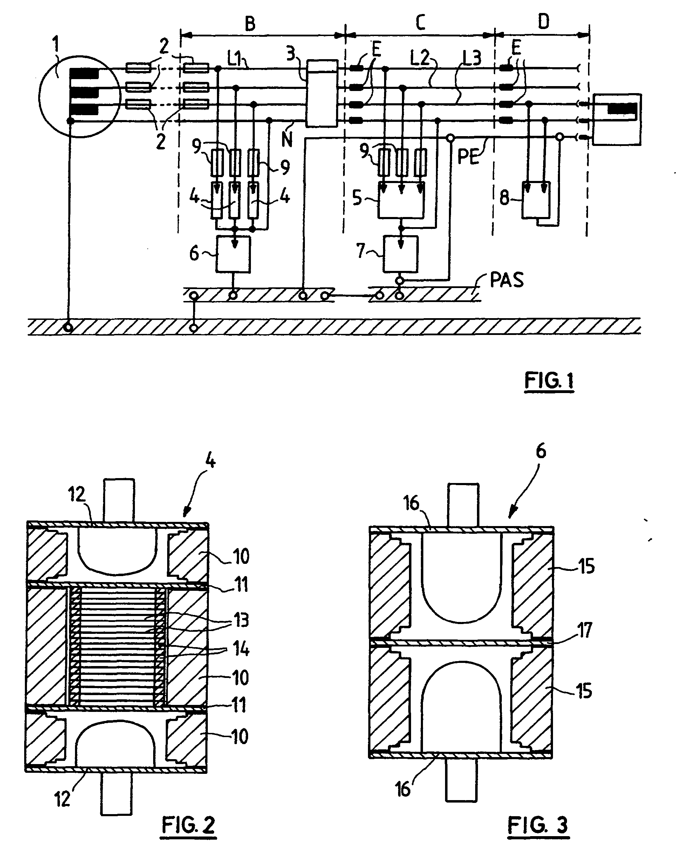

Fig. 1 zeigt eine schematische Darstellung einer Blitz- und Überspannungsschutzeinrichtung nach dem TT-System für beispielsweise eine Mobilfunkstation. Von einem Stromgenerator 1 führen über Hauptsicherungen 2 die Aussenleiter L₁, L₂ und L₃ sowie der Neutralleiter N zu einem Elektrizitätszähler 3 und von diesem zu den Verbrauchern. Mit dem Bezugszeichen PE ist der Erdleiter bezeichnet, der beim TT-System nicht geführt ist. Der Erdleiter PE führt zu einer Potentialausgleichsschiene PAS, an welche die Schutzleiter angeschlossen sind, um einen gemeinsamen Potentialausgleich für die ganze bauliche Anlage zu erreichen. Das Blitzschutzsystem der baulichen Anlage umfasst einen landläufig als Blitzschutzanlage bezeichneten äusseren Blitzschutz, bestehend aus einer Fangeinrichtung, Ableitungen und einer Erdungsanlage und den in Fig. 1 dargestellten inneren Blitz- und Überspannungsschutz.

Der innere Blitz- und Überspannungsschutz ist nach DIN VOE 0675/6 in drei Anforderungsklassen unterteilt:
- Klasse B: Grobschutz im Hauptverteiler, Stossspannungsfestigkeit < 4 kV - Blitzstromableiter
- Klasse C: Mittelschutz im Unterverteiler, Stossspannungsfestigkeit < 2.5 kV - Überspannungsableiter für den Mittelschutz
- Klasse D: Feinschutz direkt an den schützenden Geräten und Anlagen, Stossspanungsfestigkeit < 1.5 kV - Überspannunsableiter für den Feinschutz.

Der räumliche Bereich der drei Anforderungsklassen B, C und D ist in Fig. 1 eingezeichnet.

Darstellungsgemäss sind die Aussenleiter L₁, L₂ und L₃ im Grobschutzbereich B über je einen Blitzstromableiter 4 und im Mittelschutzbereich C über einen dreipoligen Überspannungsableiter 5 für den Mittelschutz mit dem Neutralleiter N verbunden. Im Grobschutzbereich B ist zwischen die Blitzstromableiter 4 und die Potentialausgleichsschiene PAS ist ein Summenstromableiter 6 für den Grobschutz und im Mittelschutzbereich C ist zwischen den Überspannungsableiter 5 und die Potentialausgleichsschiene PAS ein Summenstromableiter 7 für den Mittelschutz eingefügt. Im Feinschutzbereich D sind die Leiter L3 und N über einen Überspannungsableiter 8 für den Feinschutz mit dem Erdleiter PE verbunden. Den Blitzstromableitern 4 und dem Überspannungsableiter 5 sind jeweils Vorsicherungen 9 vorgeschaltet, und die Leitungen L₁ bis L₃ und N enthalten ab einer Länge von 10 m Entkopplungselemente E.

Der Mittelschutz C und der Feinschutz D bilden nicht Gegenstand der vorliegenden Erfindung und werden daher nicht näher beschrieben. Als Überspannungsableiter für den Mittelschutz kann beispielsweise der Überspannungsableiter EnerPro283Tr und als Überspannungsableiter für den Feinschutz der Überspannungsableiter EnerPro220Tr der Alarmcom Leutron GmbH, D-70794 Filderstadt-Bonlanden verwendet werden.

Wenn ein Blitzstromleiter durch Überlastung defekt wird, kommt es vor, dass der Isolationswiderstand sehr niedrig wird, oder, dass der Ableiter einen Kurzschluss bildet. In den TN-Systemen werden die Blitzableiter zwischen Phase und Erde geschaltet. Würden sie auch im TT-System so geschaltet werden, dann könnten die Sicherungen 9 wegen des hohen Erdwiderstands nicht ansprechen. Die Folge davon wären ein hoher Stromverbrauch und eine Anhebung des Erdpotentials sowie damit verbunden eine nicht unerhebliche Lebens- und Brandgefahr. Aus diesem Grund werden die Blitzstromableiter im TT-System zwischen Phase und Neutralleiter geschaltet, damit im Fall eines defekten Blitzstromableiters sichergestellt ist, dass die Sicherungen den Stromkreis unterbrechen.

Für die Ableitung der Blitzströme auf Erde wird der Summenstromableiter zwischen Neutralleiter und Erde eingesetzt, der den Gesamtstossstrom der Blitzstromableiter 4 ableiten können muss. Da beim Ansprechen der Blitzstromableiter 4 zusätzlich auch der Strom der Stromversorgung 1 gegen den Neutralleiter N fliessen kann, wodurch sehr hohe Folgeströme fliessen können, müssen die Blitzstromableiter 4 neben einem hohen Ableitungsvermögen auch ein gutes Löschvermögen aufweisen. Denn wenn die Vorsicherungen 9 den Folgestrom löschen, wäre der Blitzschutz nicht mehr gegeben, und wenn die Hauptsicherungen 2 ansprechen, wäre die ganze bauliche Anlage ohne Strom. Allgemein gilt, dass die Blitzstromableiter 4 eher ein höheres Löschvermögen und der Summenstromableiter 6 eher ein höheres Ableitver-mögen aufweisen sollen.

Fig. 2 zeigt einen Querschnitt durch einen Blitzstromableiter 4 und Fig. 3 zeigte einen Querschnitt durch den Summenstromableiter 6. Der Blitzstromableiter 4 besteht aus drei hintereinander angeordneten, zylindrischen, Kammern, die am Umfang je durch einen Keramikring 10 abgeschlossen und voneinander durch Metallscheiben 11 getrennt sind. Die drei Kammern bilden einen nach aussen hermetisch abgeschlossenen Körper, der an seinen Stirnseiten durch Endelektroden 12 abgeschlossen und mit einer je nach der angestrebten Ansprechgleichspannung definierten Edelgasmischung unter genau abgestimmtem Druck gefüllt ist.

In der mittleren Kammer befindet sich eine Anzahl von Metallscheiben, vorzugsweise Kupferscheiben, die durch flache Keramikringe 14 voneinander beabstandet und gegeneinander elektrisch isoliert sind. Die drei Kammern bilden in Serie angeordnete Entladungs- oder Trennfunkenstrecken, von denen die mittlere Kammer eine Mehrzahl enthält. Das Keramikmaterial besteht vorzugsweise aus Al₂O₃ und die Elektroden 12 bestehen aus einer Ausdehnungslegierung. Die Verbindung zwischen den Keramikringen 10 und den Endelektroden 12 bzw. den die Kammern begrenzenden Metallscheiben 11 erfolgt durch Hochtemperatur-Hartlötung. Selbstverständlich sind die einzelnen Kammern gegeneinander isoliert.

Wegen der Ansprechspannung von ≤ 4 kV darf der Abstand zwischen den Endelektroden 12 eine gewisse Grösse nicht überschreiten. Um die Ansprechspannung möglichst tief zu halten, ist die mittlere Kammer mit einem Varistor (nicht dargestellt) beschaltet. Ein bevorzugtes Ausführungsbeispiel des Blitzstromableiters 4 hat folgende Abmessungen: Durchmesser: 12 mm, Abstand zwischen den Endelektroden 12: 28.7 mm, Höhe der ersten und der dritten Kammer: je 5.6 mm, Höhe der mittleren Kammer: 17.5 mm. Die mittlere Kammer enthält 19 Kupferscheiben 13, das entspricht 20 Entladungsstrecken zu denen noch die beiden Entladungsstrecken an den Endelektroden 12 kommen. Die Bogenspannung, die an einer Entladungsstrecke etwa 10 V beträgt, wird durch die in Serie angeordneten Entladungsstrecken entsprechend erhöht; so ergeben 22 Entladungsstrecken eine Bogenspannung von 220 V.

Gemäss Fig. 3 besteht der Summenstromableiter 6 aus zwei Entladungsstrecken, die in einem durch Keramikringe 15 und Endelektroden 16 abgeschlossenen Gehäuse hintereinander angeordnet sind. Zwischen den Elektroden befindet sich eine Metallplatte 17, welche die Entladungsstrecken voneinander trennt. Der Summenstromableiter 6 ist ebenso wie der Blitzstromableiter 4 nach aussen hermetisch abgeschlossen und mit einem Edelgasgemisch gefüllt. Die für die Keramikringe 15 und die Endelektroden 16 verwendeten Materialien sind die gleichen wie beim Blitzstromableiter 4.

Wie man den Fig. 2 und 3 entnehmen kann, sind die Keramikringe 15 des Summenstromableiters 6 und die beiden die äusseren Kammern begrenzenden Keramikringe 10 des Blitzstromableiters 4 an ihrer Innenfläche mit Abstufungen versehen. Diese Abstufungen verhindern, dass durch bei hohen Temperaturen von den Endelektroden 12 bzw. 16 abdampfende Partikel, die sich innen auf den Keramikringen ablagern, auf den Keramikringen eine diese verbindende leitende Schicht entsteht.

## Patentansprüche

1. Blitz- und Überspannungsschutzeinrichtung im Hauptstromversorgungssystem von baulichen Anlagen, bei dem die Aussenleiter (L₁, L₂, L₃) über je einen Blitzstromableiter (4) mit dem Neutralleiter (N) verbunden sind und zwischen diesen und die Potentialausgleichsschiene (PAS) der baulichen Anlage ein als Summenstromableiter bezeichneter spezieller Blitzstromableiter (6) eingefügt ist, **dadurch gekennzeichnet, dass** die genannten Ableiter (4, 6) eine Mehrzahl von in Serie angeordneten Entladungsstrecken aufweisen, welche in einem gasgefüllten und hermetisch abgeschlossenen Gehäuse (10, 12; 15, 16) angeordnet sind.

2. Schutzeinrichtung nach Anspruch 1, **dadurch gekennzeichnet, dass** der Summenstromableiter (6) zwei in Serie angeordnete Entladungsstrecken aufweist.

3. Schutzeinrichtung nach Anspruch 1 oder 2, **dadurch gekennzeichnet, dass** die Blitzstromableiter (4) je mehr als zehn in Serie geschaltete Entladungsstrecken aufweisen.

4. Schutzeinrichtung nach Anspruch 3, **dadurch gekennzeichnet, dass** das hermetisch abgeschlossene Gehäuse (10, 12; 15, 16) durch Ringe (10; 15) aus einem Keramikmaterial und durch die Stirnseiten abdeckende Endelektroden (12; 16) gebildet ist.

5. Schutzeinrichtung nach Anspruch 4, **dadurch gekennzeichnet, dass** das Gehäuse (10, 12; 15, 16) eine Mehrzahl von Kammern aufweist, von denen jede mindestens eine Entladungsstrecke enthält, und dass die einzelnen Kammern durch als Elektroden wirkende Metallscheiben (11; 17) voneinander getrennt sind.

6. Schutzeinrichtung nach Anspruch 5, **dadurch gekennzeichnet, dass** die Endelektroden (12; 16) und die Metallscheiben (11; 17) mit den Keramikringen (10; 15) durch Hochtemperatur-Hartlötung verbunden sind.

7. Schutzeinrichtung nach Anspruch 6, **dadurch gekennzeichnet, dass** die Keramikringe (10; 15) im Bereich der Lötstellen abgestufte Stirnflächen aufweisen.

8. Schutzeinrichtung nach den Ansprüchen 2 und 5, **dadurch gekennzeichnet, dass** der Summenstromableiter (6) zwei Kammern und eine diese trennende Metallscheibe (17) aufweist.

9. Schutzeinrichtung nach Anspruch 5, **dadurch gekennzeichnet, dass** die Blitzstromableiter (4) drei Kammern und zwei diese trennende Metallscheiben (11) aufweisen, und dass die mittlere Kammer eine Mehrzahl von in Serie angeordneten Entladungsstrecken enthält, welche durch mittels flacher Keramikringe (14) voneinander beabstandete Kupferscheiben (13) gebildet sind.

10. Schutzeinrichtung nach Anspruch 9, **dadurch gekennzeichnet, dass** die mittlere Kammer mit einem Varistor beschaltet ist.

11. Schutzeinrichtung nach einem der Ansprüche 4 bis 10, **dadurch gekennzeichnet, dass** die Elektroden (12, 16) eine sphärische, vorzugsweise eine kugelförmige, Form aufweisen.

## Claims

1. A lightning and surge protection device in the mains power supply system of buildings and other structures in which the external conductors (L₁, L₂, L₃) are each connected to the neutral conductor (N) via a lightning conductor (4), and inserted between these and the potential equalisation bar (PAS) of the building or other structure is a special lightning conductor (6) referred to as a sum current conductor,
**characterised in that**
said conductors (4, 6) have a plurality of discharge paths arranged in series which are located in a gas-filled, hermetically sealed housing (10, 12; 15, 16).

2. A protection device in accordance with claim 1,
**characterised in that**
the sum current conductor (6) has two discharge paths arranged in series.

3. A protection device in accordance with claim 1 or 2,
**characterised in that**
the lightning conductors (6) each have more than ten discharge paths arranged in series.

4. A protection device in accordance with claim 3,
**characterised in that**
the hermetically sealed housing (10, 12; 15, 16) is formed by rings (10; 15) made of a ceramic material and end electrodes (12; 16) covering the end faces.

5. A protection device in accordance with claim 4,
**characterised in that**
the housing (10, 12; 15, 16) has a plurality of chambers each of which has at least one discharge path, and the individual chambers are separated from one another by metal discs (11; 17) acting as electrodes.

6. A protection device in accordance with claim 5,
**characterised in that**
the end electrodes (12; 16) and the metal discs (11; 17) are connected to the ceramic rings (10; 15) by high temperature soldering.

7. A protection device in accordance with claim 6,
**characterised in that**
the ceramic rings (10; 15) have graduated end faces in the area of the soldering points.

8. A protection device in accordance with claims 2 and 5,
**characterised in that**
the sum current conductor (6) has two chambers and a metal disc (17) which separates them.

9. A protection device in accordance with claim 5,
**characterised in that**
the lighting conductors (4) have three chambers separated by two metal discs (11), and the central chamber contains a plurality of discharge paths arranged in series which are formed by copper discs (13) spaced by means of flat ceramic rings (14).

10. A protection device in accordance with claim 9,
**characterised in that**
the central chamber is wired with a varistor.

11. A protection device in accordance with one of claims 4 to 10,
**characterised in that**
the electrodes (12, 16) are spherical in shape, preferably ball-shaped.

## Revendications

1. Dispositif de protection contre la foudre et les surtensions dans un système d'alimentation en courant principal de bâtiments, dans lequel les conducteurs extérieurs (L₁, L₂, L₃) sont reliés au conducteur neutre (N) par l'intermédiaire d'un parafoudre respectivement (4) et entre ceux-ci et le bus de compensation de potentiel (PAS) du bâtiment, un parafoudre spécial (6) appelé parafoudre composite est intro-duit, **caractérisé en ce que** les parafoudres mentionnés (4, 6) présentent une pluralité d'intervalles de décharge connectés en série, disposés dans un boîtier (10, 12 ; 15, 16) rempli de gaz et fermé hermétiquement.

2. Dispositif de protection selon la revendication 1, **caractérisé en ce que** le parafoudre composite (6) présente deux intervalles de décharge disposés en série.

3. Dispositif de protection selon la revendication 1 ou 2, **caractérisé en ce que** les parafoudres (4) présentent chacun plus de dix intervalles de décharge connectés en série.

4. Dispositif de protection selon la revendication 3, **caractérisé en ce que** le boîtier (10, 12 ; 15, 16) fermé hermétiquement est formé par des anneaux (10 ; 15) d'un matériau en céramique et par des électrodes d'extrémité (12 ; 16) recouvrant les faces frontales.

5. Dispositif de protection selon la revendication 4, **caractérisé en ce que** le boîtier (10, 12 ; 15, 16) présente une pluralité de chambres dont chacune contient au moins un intervalle de décharge, et les chambres individuelles sont séparées les unes des autres par des disques métalliques (11 ; 17) agissant en tant qu'électrodes.

6. Dispositif de protection selon la revendication 5, **caractérisé en ce que** les électrodes d'extrémité (12 ; 16) et les disques métalliques (11 ; 17) sont reliés aux anneaux en céramique (10 ; 15) par une brasure forte à haute température.

7. Dispositif de protection selon la revendication 6, **caractérisé en ce que** les anneaux en céramique (10 ; 15) présentent, dans la zone des points de brasure, des surfaces frontales étagées.

8. Dispositif de protection selon les revendications 2 et 5, **caractérisé en ce que** le parafoudre composite (6) présente deux chambres et un disque métallique (17) séparant celles-ci.

9. Dispositif de protection selon la revendication 5,**caractérisé en ce que** les parafoudres (4) présentent trois chambres et deux disques métalliques (11) séparant celles-ci, et la chambre centrale contient une pluralité d'intervalles de décharge disposés en série, formés par des disques de cuivre (13) espacés les uns des autres au moyen d'anneaux en céramique plats (14).

10. Dispositif de protection selon la revendication 9, **caractérisé en ce que** la chambre centrale est connectée à une varistance.

11. Dispositif de protection selon l'une des revendications 4 à 10, **caractérisé en ce que** les électrodes (12, 16) présentent une forme sphérique, de préférence une forme de boule.
